# EUROPÄISCHE PATENTSCHRIFT

(11) **EP 2 788 213 B1**
(45) Veröffentlichungstag und Bekanntmachung des Hinweises auf die Patenterteilung: **21.12.2016**
(21) Anmeldenummer: 12780752.7
(22) Anmeldetag: 05.11.2012
(51) Int. Cl.: B60K 6/42, B60L 11/12, B60L 11/14, B60L 15/20, F16H 3/72, B60K 6/48, B60K 6/365

(54) **GETRIEBE UND ANTRIEBSTRANG MIT EINEM GETRIEBE**
GEARBOX AND DRIVE TRAIN WITH A GEARBOX
BOÎTE DE VITESSES ET CHAÎNE CINÉMATIQUE AVEC UNE BOÎTE DE VITESSES

(30) Priorität: 08.12.2011 DE 102011087995
(43) Veröffentlichungstag der Anmeldung: 15.10.2014
(73) Patentinhaber: ZF Friedrichshafen AG, 88046 Friedrichshafen (DE)
(72) Erfinder: KALTENBACH, Johannes, 88046 Friedrichshafen (DE); GRIESMEIER, Uwe, 88677 Markdorf (DE)
(86) Internationale Anmeldenummer: PCT/EP2012/071785
(87) Internationale Veröffentlichungsnummer: WO 2013/083337

(56) Entgegenhaltungen:
- DE-A1-102005 057 930
- DE-A1-102009 024 625
- US-A1- 2003 199 352
- US-A1- 2009 186 735
- US-B1- 6 592 484

## Beschreibung

Die Erfindung betrifft ein Getriebe eines Kraftfahrzeugs nach dem Oberbegriff des Patentanspruchs 1. Des Weiteren betrifft die Erfindung einen Antriebstrang eines Kraftfahrzeugs mit einem solchen Getriebe.

Aus der Praxis sind eine Vielzahl unterschiedlicher Getriebe für Kraftfahrzeuge bekannt, so zum Beispiel automatische Schaltgetriebe und automatisierte Schaltgetriebe, die in der Regel über eine Vielzahl von als Kupplungen oder Bremsen ausgebildete, reibschlüssige Schaltelemente und/oder als Klauen ausgebildete, formschlüssige Schaltelemente aufweisen. Derartige Getriebe verfügen bedingt durch die Vielzahl der verbauten Schaltelemente über einen relativ komplexen Aufbau. Es besteht Bedarf an einfacheren Getrieben, die insbesondere in sogenannten Plug-In Hybridfahrzeugen oder sogenannten Plug-In Elektrofahrzeugen zum Einsatz kommen können.

Hiervon ausgehend liegt der vorliegenden Erfindung die Aufgabe zu Grunde, ein neuartiges Getriebe eines Kraftfahrzeugs und einen Antriebstrang mit einem solchen Getriebe zu schaffen. Diese Aufgabe wird durch ein Getriebe gemäß Patentanspruch 1 gelöst. Erfindungsgemäß ist ein erstes Element eines ersten Planetensatzes mit einem ersten Element eines zweiten Planetensatzes über eine zwischen die Getriebeeingangswelle und die Getriebeausgangswelle schaltbare Zwischenwelle permanent gekoppelt, wobei an diese Zwischenwelle eine elektrische Maschine permanent gekoppelt ist, wobei ein zweites Element des zweiten Planetensatzes mit der Getriebeausgangswelle permanent gekoppelt ist, wobei in einer ersten Schaltstellung eines ersten formschlüssigen Schaltelements die Getriebeeingangswelle direkt an die Getriebeausgangswelle gekoppelt ist, wohingegen in einer zweiten Schaltstellung des ersten formschlüssigen Schaltelements die Getriebeeingangswelle an ein zweites. Element des ersten Planetensatzes gekoppelt ist, und wobei in einer ersten Schaltstellung eines zweiten formschlüssigen Schaltelements ein drittes Element des zweiten Planetensatzes gehäusefest angebunden ist, wohingegen in einer zweiten Schaltstellung (es zweiten formschlüssigen Schaltelements das dritte Element des zweiten Planetensatzes an das zweite Element oder an das erste Element des zweiten Planetensatzes gekoppelt und demnach der zweite Planetensatz im Blockumlauf überbrückt ist.

Das gattungsbildende Dokument US 6 592 484 B1 offenbart eine Getriebe mit dem Merkmalen das Oberbegriffs von Anspruch 1.

Das erfindungsgemäße Getriebe verfügt im einfachsten Fall über ausschließlich zwei Planetensätze bzw. Planetenstufen und zwei Schaltelemente, wobei die beiden Schaltelemente vorzugsweise als Doppelschaltelemente ausgeführt sind, die zumindest zwei geschlossene Schaltstellungen aufweisen. Mit einem solchen Getriebe können für die elektrische Maschine, die permanent an eine Zwischenwelle des Getriebes gekoppelt ist, zwei Gänge und für ein separates Antriebsaggregat, welches einen Verbrennungsmotor und/oder eine weitere elektrische Maschine umfasst, mindestens drei Gänge bereitgestellt werden, wobei die Schaltelemente jeweils lastschaltbar sind, sodass demnach während der Schaltung der Schaltelemente an der Getriebeausgangswelle eine Zugkraft bereitgestellt werden kann. Ein solches Getriebe eignet sich vorzugsweise zur Verwendung in Plug-In Hybridfahrzeugen sowie Plug-In Elektrofahrzeugen.

Nach einer ersten vorteilhaften Weiterbildung der Erfindung ist ein drittes Element des ersten Planetensatzes permanent gehäusefest angebunden. Das Getriebe stellt dann für die permanent an die Zwischenwelle gekoppelte elektrische Maschine zwei Gänge und für das Antriebsaggregat drei Gänge bereit. Nach dieser Weiterbildung der Erfindung sind lediglich zwei als Doppelschaltelemente ausgebildete, formschlüssige Schaltelemente erforderlich, wodurch sich ein besonders einfacher Aufbau des Getriebes ergibt.

Nach einer zweiten, alternativen vorteilhaften Weiterbildung der Erfindung ist ein drittes formschlüssiges Schaltelement vorhanden, wobei in einer ersten Schaltstellung des dritten Schaltelements ein drittes Element des ersten Planetensatzes gehäusefest angebunden ist, und wobei in einer zweiten Schaltstellung des dritten Schaltelements das dritte Element des ersten Planetensatzes an das zweite Element des ersten Planetensatzes gekoppelt ist. Das Getriebe stellt dann für die permanent an die Zwischenwelle gekoppelte elektrische Maschine zwei Gänge und für das Antriebsaggregat vier Gänge bereit. Nach dieser Weiterbildung der Erfindung verfügt das Getriebe über drei als Doppelschaltelemente ausgebildete, formschlüssige Schaltelemente, wodurch für das Antriebsaggregat gegenüber der Weiterbildung, in welcher das Getriebe ausschließlich zwei als Doppelschaltelemente ausgebildete formschlüssige Schaltelemente aufweist, eine höhere Anzahl von Gängen bereitgestellt werden kann.

Das zweite formschlüssige Schaltelement wird zwischen der ersten Schaltstellung und der zweiten Schaltstellung vorzugsweise zur Gewährleistung einer zugkraftunterbrechungsfreien Schaltung dann geschaltet, wenn das Antriebsaggregat an der Getriebeausgangswelle Zugkraft bereitstellt. Das erste formschlüssige Schaltelement wird zwischen der ersten Schaltstellung und der zweiten Schaltstellung und/ oder das dritte formschlüssige Schaltelement wird zwischen der ersten Schaltstellung und der zweiten Schaltstellung vorzugsweise zur Gewährleistung einer zugkraftunterbrechungsfreien dann geschaltet, wenn die permanent an die Zwischenwelle gekoppelte elektrische Maschine an der Getriebeausgangswelle Zugkraft bereitstellt. Die Ausführung von zugkraftunterbrechungsfreien Schaltungen der formschlüssigen Schaltelemente ist besonders bevorzugt und erlaubt einen besonders vorteilhaften Betrieb eines das erfindungsgemäße Getriebe aufweisenden Kraftfahrzeugs.

Nach einer ersten vorteilhaften Variante sind die Getriebeeingangswelle und die Getriebeausgangswelle koaxial hintereinander angeordnet, wobei die Zwischenwelle, an welche die erste elektrische Maschine permanent gekoppelt ist, zumindest abschnittsweise koaxial um die Getriebeausgangswelle herum angeordnet ist. Diese Variante eignet sich insbesondere dann, wenn das Getriebe in einer Standardantriebsstrangkonfiguration zum Einsatz kommen soll, in welcher das Getriebe in Längsrichtung des Kraftfahrzeugs verbaut ist, wenn sich also die Getriebeeingangswelle und die Getriebeausgangswelle in Längsrichtung des Kraftfahrzeugs erstrecken.

Nach einer zweiten vorteilhaften Variante ist die Getriebeausgangswelle zumindest abschnittsweise koaxial um eine weitere Zwischenwelle herum angeordnet, wobei die Zwischenwelle, an welche die erste elektrische Maschine permanent gekoppelt ist, ebenfalls zumindest abschnittsweise koaxial um die weitere Zwischenwelle, die koaxial hinter der Getriebeeingangswelle angeordnet ist, herum angeordnet ist. Diese Variante der Erfindung ist insbesondere dann geeignet, wenn das Getriebe in Querrichtung im Fahrzeug zu verbauen ist, wenn also die Getriebeeingangswelle und die Getriebeausgangswelle des Getriebes quer zur Längsrichtung des Kraftfahrzeugs verlaufen.

Der erfindungsgemäße Antriebstrang eines Kraftfahrzeugs in Patentanspruch 12 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema eines ersten erfindungsgemäßen Getriebes zusammen mit einem Verbrennungsmotor und zwei elektrischen Maschinen;
- Fig. 2: ein Schema eines zweiten erfindungsgemäßen Getriebes zusammen mit einem Verbrennungsmotor und zwei elektrischen Maschinen;
- Fig. 3: ein Schema eines dritten erfindungsgemäßen Getriebes zusammen mit einem Verbrennungsmotor und einer elektrischen Maschine;
- Fig. 4: ein Schema eines vierten erfindungsgemäßen Getriebes zusammen mit einem Verbrennungsmotor und zwei elektrischen Maschinen;
- Fig. 5: ein Schema eines fünften erfindungsgemäßen Getriebes zusammen mit einem Verbrennungsmotor und einer elektrischen Maschine;
- Fig. 6: ein Schema eines sechsten erfindungsgemäßen Getriebes zusammen mit einem Verbrennungsmotor und zwei elektrischen Maschinen;
- Fig. 7: ein Schema eines siebten erfindungsgemäßen Getriebes zusammen mit einem Verbrennungsmotor und zwei elektrischen Maschinen;
- Fig. 8: ein Schema eines achten erfindungsgemäßen Getriebes zusammen mit einem Verbrennungsmotor und zwei elektrischen Maschinen;
- Fig. 9: ein Schema eines neunten erfindungsgemäßen Getriebes zusammen mit einem Verbrennungsmotor und zwei elektrischen Maschinen;
- Fig. 10: ein Schema eines zehnten erfindungsgemäßen Getriebes zusammen mit einem Verbrennungsmotor und zwei elektrischen Maschinen;
- Fig. 11: ein Schema eines elften erfindungsgemäßen Getriebes zusammen mit zwei elektrischen Maschinen; und
- Fig. 12: ein Schema eines weiteren erfindungsgemäßen Getriebes zusammen mit zwei elektrischen Maschinen.

Die hier vorliegende Erfindung betrifft ein Getriebe für ein Fahrzeug, insbesondere für ein Plug-In Hybridfahrzeug oder ein Plug-In Elektrofahrzeug. Weiterhin betrifft die Erfindung einen Antriebsstrang eines Kraftfahrzeugs mit einem solchen Getriebe.

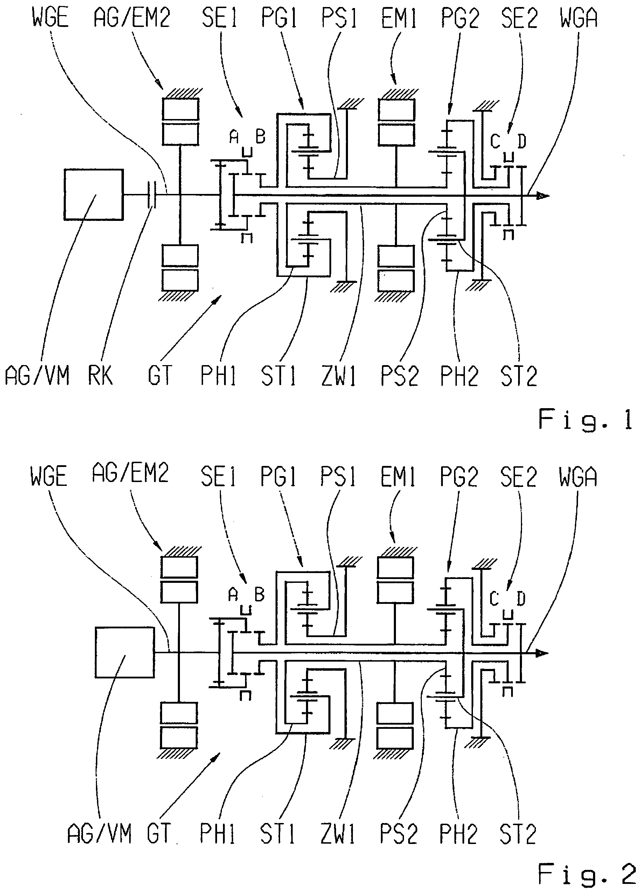

Fig. 1 zeigt ein erstes Ausführungsbeispiel eines erfindungsgemäßen Getriebes GT, wobei das Getriebe GT eine Getriebeeingangswelle WGE und eine Getriebeausgangswelle WGA aufweist. An die Getriebeeingangswelle WGE ist ein Antriebsaggregat AG koppelbar, an die Getriebeausgangswelle WGA ist ein in Fig. 1 nicht gezeigter Achsantrieb koppelbar. Im Ausführungsbeispiel der Fig. 1 umfasst das Antriebsaggregat AG einen Verbrennungsmotor VM und eine elektrische Maschine EM2.

Das Getriebe GT umfasst im Ausführungsbeispiel der Fig. 1 zwei koaxial hintereinander angeordnete Planetensätze PG1 und PG2, die auch als Planetenstufen bezeichnet werden können, sowie zwei formschlüssige Schaltelemente SE1 und SE2. Ein erstes Element einer ersten Planetenstufe PG1, nämlich gemäß Fig. 1 das Hohlrad PH1 der ersten Planetenstufe PG1, ist mit einem ersten Element einer zweiten Planetenstufe PG2, nämlich gemäß Fig. 1 mit dem Sonnenrad PS2 der zweiten Planetenstufe PG2, über eine zwischen die Getriebeeingangswelle WGE und die Getriebeausgangswelle WGA schaltbare Zwischenwelle ZW1 permanent gekoppelt, wobei an diese Zwischenwelle ZW1 eine elektrische Maschine EM1 permanent gekoppelt ist.
- Die beiden Schaltelemente SE1 und SE2 sind gemäß Fig. 1 als Doppelschaltelemente ausgeführt, die jeweils zwei geschlossene Schaltstellungen aufweisen sowie eine geöffnete bzw. neutrale Schaltstellung. Bei den beiden geschlossenen Schaltstellungen des ersten Schaltelements SE1 handelt es sich um die Schaltstellungen A und B und beiden geschlossenen Schaltstellungen des zweiten Schaltelements SE2 handelt es sich um die Schaltstellungen C und D.

Dann, wenn das erste Schaltelement SE1 die erste Schaltstellung A einnimmt bzw. dann, wenn die erste Schaltstellung A des ersten Schaltelements SE1 geschlossen ist, ist die Getriebeeingangswelle WGE direkt an die Getriebeausgangswelle WGA gekoppelt. Dann hingegen, wenn die zweite Schaltstellung B des ersten formschlüssigen Schaltelements SE1 geschlossen ist, ist die Getriebeeingangswelle WGE an ein zweites Element der ersten Planetenstufe PG1 gekoppelt, nämlich in Fig. 1 an den Steg ST1 der ersten Planetenstufe PG1.

Ein zweites Element der zweiten Planetenstufe PG2, nämlich gemäß Fig. 1 der Steg ST2 der zweiten Planetenstufe PG2, ist permanent mit der Getriebeausgangswelle WGA gekoppelt.

Dann, wenn am zweiten formschlüssigen Schaltelement SE2 die erste Schaltstellung C geschlossen ist, ist ein drittes Element der zweiten Planetenstufe PG2, nämlich in Fig. 2 das Hohlrad PH2 der zweiten Planetenstufe PG2, gehäusefest angebunden. Dann hingegen, wenn die zweite Schaltstellung D des zweiten Schaltelements SE2 geschlossen ist, ist das dritte Element der zweiten Planetenstufe PG2, nämlich in Fig. 1 das Hohlrad PH2 desselben, an das zweite Element der zweiten Planetenstufe PG2, nämlich in Fig. 1 an den Steg ST2 der zweiten Planetenstufe PG2, und damit an die Getriebeausgangswelle WGA gekoppelt oder alternativ an das erste Element bzw. das Sonnerad PS2. Dann, wenn das zweite Schaltelement SE2 die zweite Schaltstellung D einnimmt, ist dasselbe in jedem Fall überbrückt und befindet sich im Blockumlauf.

Ein drittes Element der ersten Planetenstufe PG1, nämlich gemäß Fig. 1 der das Sonnerad PS1 der ersten Planetenstufe PG1, ist gemäß Fig. 1 permanent gehäusefest angebunden.

Das Getriebe GT der Fig. 1 verfügt demnach über die beiden Planetensätze PG1 und PG2 sowie über die beiden formschlüssigen, als Doppelschaltelemente ausgeführten Schaltelemente SE1 und SE2. Die zweite Planetenstufe PG2 erzeugt für die elektrische Maschine EM1, die permanent an die Zwischenwelle ZW1 gekoppelt ist, zwei Gänge, nämlich in der Schaltstellung C des zweiten Schaltelements SE2 einen ersten Gang mit einer ersten Übersetzung und in der Schaltstellung D des zweiten Schaltelements SE2 einen zweiten Gang mit einer zweiten Übersetzung.

Da, wie bereits erwähnt, bei geschlossener zweiter Schaltstellung D des zweiten Schaltelements SE2 die zweite Planetenstufe PG2 überbrückt ist, stellt dasselbe bei geschlossener zweiter Schaltstellung D als zweiten Gang für die elektrische Maschine EM1, die permanent an die Zwischenwelle ZW1 angebunden ist, eine Direktübersetzung bzw. einen Direktgang bereit.

Neben diesen beiden Gängen für die elektrische Maschine EM1, die permanent an die Zwischenwelle ZW1 gekoppelt ist, stellt das Getriebe GT der Fig. 1 für das Antriebsaggregat AG drei Gänge bereit. Dann, wenn im ersten Schaltelement SE1 die zweite Schaltstellung B geschlossen ist, stellt die erste Planetenstufe PG1 für das Antriebsaggregat AG eine sogenannte Overdrive-Übersetzung bereit, wobei diese Übersetzung mit der hierzu in Reihe geschalteten Übersetzung der zweiten Planetenstufe PG2 bei geschlossener erster Schaltstellung C am zweiten Schaltelement SE2 einen ersten Gang für das Antriebsaggregat AG oder bei geschlossener zweiter Schaltstellung D am zweiten Schaltelement SE2 einen dritten Gang für das Antriebsaggregat AG bereitstellt.

Dann, wenn am ersten Schaltelement SE1 die erste Schaltstellung A geschlossen ist, ist das Antriebsaggregat AG direkt an die Getriebeausgangswelle WGA gekoppelt, wobei dieser Direktgang den zweiten Gang für das Antriebsaggregat AG bereitstellt. Dieser zweite Gang ist unabhängig von der zweiten Planentenstufe PG2, wodurch durch die zweite Planetenstufe PG2 dann im Hintergrund lastfrei geschaltet werden kann.

Die Schaltpositionen C und D des zweiten Schaltelements SE2 werden vorzugsweise in einem drehzahlgeregelten Betrieb über die elektrische Maschine EM1, die permanent an die Zwischenwelle ZW1 gekoppelt ist, aktiv synchronisiert. Die Schaltstellungen A und B des ersten Schaltelements SE1 können auf verschiedene Weise synchronisiert werden. So ist es möglich, die Synchronisierung derselben über eine Drehzahlregelung der Getriebeeingangswelle WGE vorzunehmen und zwar über das Antriebsaggregat AG, nämlich in Fig. 1 über den Verbrennungsmotor VM und/oder die elektrische Maschine EM2.

Dann, wenn, wie in Fig. 1 gezeigt, der Getriebeeingangswelle WGE eine reibschlüssige Kupplung RK zugeordnet ist, kann diese Synchronisierung auch über einen schlupfenden Betrieb der Reibkupplung RK erfolgen.

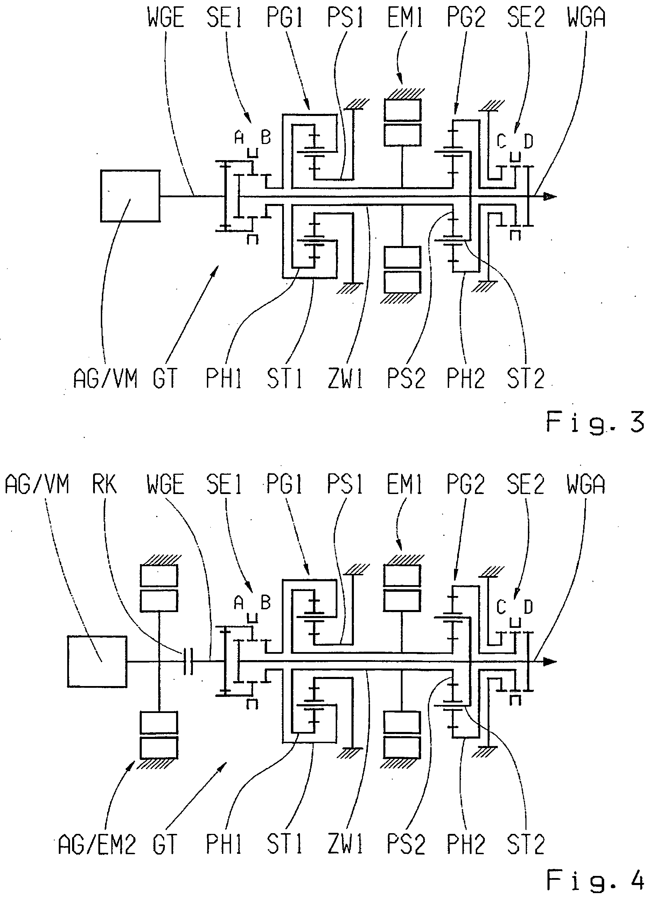

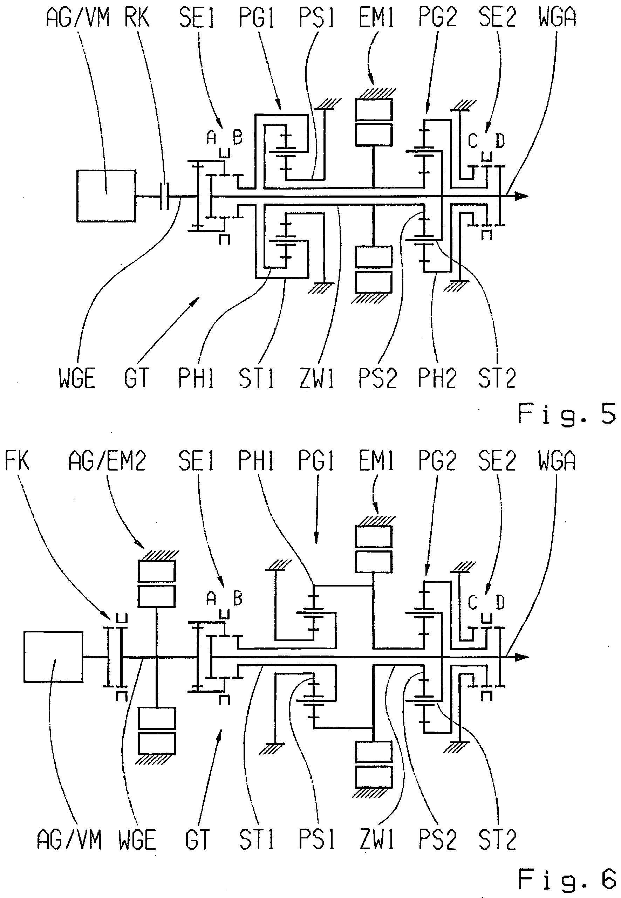

Ist diese Reibkupplung RK unmittelbar dem Schaltelemente SE1 vorgelagert (siehe insbesondere Fig. 4 und 5), so kann diese Synchronisierung in den Schaltpositionen A und B bei geöffneter Reibkupplung RK über ein synchronisiertes Schaltelement erfolgen.

Dann, wenn eine Schaltung am ersten Schaltelement SE1 zwischen den Schaltstellungen A und B vorgenommen wird, kann die elektrische Maschine EM1, die permanent an die Zwischenwelle ZW1 gekoppelt ist, an der Getriebeausgangswelle WGA Zugkraft bereitstellen, um so ein zugkraftunterbrechungsfreies Schalten des ersten Schaltelements SE1 zu gewährleisten. Ebenso kann am zweiten Schaltelement SE2 ein zugkraftunterbrechungsfreies Schalten zwischen den Schaltstellungen C und D realisiert werden, nämlich dann, wenn das Antriebsaggregat an der Getriebeausgangswelle WGA Zugkraft bereitstellt, wozu am ersten Schaltelement SE1 die erste Schaltstellung A geschlossen ist.

Dann, wenn ausschließlich am ersten Schaltelement SE1 die zweiten Schaltstellung B geschlossen ist und das zweite Schaltelement SE2 eine neutrale Schaltstellung einnimmt, also weder die erste Schaltstellung C noch die zweite Schaltstellung D geschlossen ist, kann der Verbrennungsmotor VM des Antriebsaggregats AG über die elektrische Maschine EM1 gestartet werden. Weiterhin ist dann unabhängig von der Fahrgeschwindigkeit ein Ladebetrieb über die elektrische Maschine EM1 möglich.

Bei einer rückwärts drehenden, elektrischen Maschine EM1 kann eine Rückwärtsfahrt realisiert werden.

Ferner kann mit dem Getriebe gemäß Fig. 1 dann, wenn die Reibkupplung RK geöffnet wird, ein rein elektrisches Fahren über beide elektrischen Maschinen EM1 und EM2 realisiert werden, wobei dann beide elektrischen Maschinen EM1 und EM2 an der Getriebeausgangswelle WGA ein Antriebsmoment bereitstellen.

Ferner sind beim Getriebe der Fig. 1 bei rein elektrischer Fahrt bei geöffneter Reibkupplung RK Lastschaltungen möglich, nämlich Lastschaltungen zwischen den Schaltstellungen C und D des zweiten Schaltelements SE2, wobei dann die elektrische Maschine EM2 bei geschlossener Schaltstellung A am Schaltelement SE1 an der Getriebeausgangswelle WGA ein Antriebsmoment bereitstellt. In diesem Fall wird dann für die elektrische Maschine EM1 der Gang gewechselt.

Bevorzugte Schaltstellungskombinationen der Schaltstellungen A, B, C und D der formschlüssigen Schaltelemente SE1 und SE2 sind in der nachfolgenden Schalttabelle wiedergegeben, wobei die Schalttabelle weiterhin die beiden Übersetzungen i-AG und i-EM1 für das Antriebsaggregat AG und die elektrische Maschine EM1 wiedergibt, nämlich für ein Zahlenbeispiel, in welchem die erste Planetenstufe PG1 eine Standgetriebeübersetzung i0 von -2,3 und die zweite Planetenstufe PG2 eine Standgetriebeübersetzung i0 von -1,5 aufweist.

| A | B | C | D | i-AG | i-EM1 | |
|---|---|---|---|---|---|---|
| - | x | x | - | 1.74 | 2.5 | Gang 1 für VM/EM2. EM1 stützt Zugkraft während Schaltung B-A an Schaltelement SE1. |
| x | - | x | - | 1.0 | 2.5 | Gang 2 für VM/EM2. EM1 synchronisiert Schaltung C-D an Schaltelement SE2. |
| x | - | - | x | 1.0 | 1.0 | Gang 2 für VM/EM2. EM1 stützt Zugkraft während Schaltung A-B an Schaltelement SE1. |
| - | x | - | x | 0.7 | 1.0 | Gang 3 für VM/EM2. |
| - | x | - | - | | | Neutral. VM Start über EM1 möglich. Laden in Neutral möglich. |

In der obigen Tabelle bedeutet das Symbol "x", dass die jeweilige Schaltstellung geschlossen ist, wohingegen das Symbol "-" bedeutet, dass die jeweilige Schaltstellung geöffnet ist.

Das Getriebe GT der Fig. 1 weist für die elektrische Maschine EM1, die permanent an die Zwischenwelle ZW1 gekoppelt ist, einen kürzeren ersten Gang auf als für den Verbrennungsmotor VM. Dadurch kann die elektrische Maschine EM1 als Anfahrelement dienen und ein ausreichend hohes Anfahrelement bereitstellen.

Der Verbrennungsmotor VM wird vor allem bei höheren Fahrgeschwindigkeiten und höheren Fahrleistungen benötigt, weshalb die längeren Getriebeübersetzungen für den Verbrennungsmotor VM vorteilhaft sind. Der Bereich geringer Fahrgeschwindigkeiten, die unterhalb des Fahrbereichs des ersten Gangs für den Verbrennungsmotor VM liegen, kann rein elektrisch mit der elektrischen Maschine EM1, die permanent an die Zwischenwelle, ZW1 gekoppelt ist, abgedeckt werden. Die hierzu benötigte elektrische Energie wird entweder von einem elektrischen Energiespeicher bereitgestellt oder durch eine vom Verbrennungsmotor VM generatorisch betriebene elektrische Maschine EM2 des Antriebsaggregats AG.

Fig. 2 zeigt eine Variante des Getriebes GT der Fig. 1, in welcher die Getriebeeingangswelle WGE keine Reibkupplung RK aufweist. Bei der Reibkupplung RK, die in Fig. 1 zwischen den Verbrennungsmotor VM des Antriebsaggregats AG und die Getriebeeingangswelle WGE geschaltet ist, handelt es sich demnach um eine optionale Baugruppe. In Fig. 2 ist demnach nicht nur die elektrische Maschine EM2 des Antriebsaggregats AG sondern auch der Verbrennungsmotor VM des Antriebsaggregats AG fest an die Getriebeeingangswelle WGE angebunden. In diesem Fall kann über das erste Schaltelement SE1 das Antriebsaggregat AG von der Getriebeausgangswelle WGA abgekoppelt bzw. an dieselbe angekoppelt werden.

In der Variante der Fig. 2 ist in einem rein elektrischen Betrieb die Schaltung am zweiten Schaltelement SE2 für einen Gangwechsel der elektrischen Maschine EM2 zugkraftunterbrochen. Ferner kann in der Variante der Fig. 2 bei geringen Fahrgeschwindigkeiten ein serieller Fahrbetrieb bereitgestellt werden, in welchem die elektrische Maschine EM2 des Antriebsaggregats AG elektrischen Strom zum Antreiben der elektrischen Maschine EM1 generiert.

In der Variante der Fig. 3 ist im Vergleich zur Variante der Fig. 1 nicht nur die Reibkupplung RK sondern auch die elektrische Maschine EM2 des Antriebsaggregats AG nicht vorhanden, sondern ausschließlich der Verbrennungsmotor VM. Bei einem rein elektrischen Betrieb ist dann eine Schaltung am zweiten Schaltelement SE2 zur Ausführung eines Gangwechsels für die elektrische Maschine EM1 zugkraftunterbrochen.

Bei geringen Fahrgeschwindigkeiten, bei welchen der erste Gang am Verbrennungsmotor VM nicht eingelegt werden kann, ist dann nur ein batterieelektrisches Fahren über die elektrische Maschine EM1 möglich. Sollte der elektrische Energiespeicher leer sein, ist in der Variante der Fig. 3 ein Laden desselben beim Getriebe GT in Neutral erforderlich.

Fig. 4 zeigt eine Variante des erfindungsgemäßen Getriebes GT, in welchem in Übereinstimmung mit Fig. 1 wiederum eine Reibkupplung RK und eine elektrische Maschine EM2 des Antriebsaggregats AG vorhanden ist, wobei jedoch die Reibkupplung RK nicht nur zwischen die Getriebeeingangswelle WGE und den Verbrennungsmotor VM sondern auch zwischen die Getriebeeingangswelle WGE und die elektrische Maschine EM2 des Antriebsaggregats AG geschaltet ist. In diesem Fall wird bei geöffneter Reibkupplung RK sowohl der Verbrennungsmotor VM des Antriebsaggregats AG als auch die elektrische Maschine EM2 des Antriebsaggregats AG von der Getriebeeingangswelle WGE abgekoppelt. Die Reibkupplung RK ermöglicht demnach ein Abkoppeln des Verbrennungsmotors VM unter Last, zum Beispiel bei einer Notbremsung. Weiterhin ermöglicht die Reibkupplung RK beim Ausführungsbeispiel der Fig. 4 ein Not-Anfahren im ersten Gang bei ausgefallenem elektrischem System.

Fig. 5 zeigt eine Variante des Getriebes der Fig. 1, in welchem zwar die Reibkupplung RK vorhanden ist, wobei jedoch das Antriebsaggregat AG ausschließlich den Verbrennungsmotor VM und nicht die elektrische Maschine EM2 umfasst. Die Reibkupplung RK ermöglicht wiederum ein Abkoppeln des Verbrennungsmotors VM unter Last, zum Beispiel bei einer Notbremsung. Weiterhin ermöglicht die Reibkupplung RK ein Not-Anfahren im ersten Gang bei ausgefallenem elektrischem System. Weiterhin ermöglicht die Reibkupplung RK einen Start des Verbrennungsmotors VM aus einer rein elektrischen Fahrt über die elektrische Maschine EM1 heraus.

Fig. 6 zeigt eine Variante des Getriebes GT der Fig. 1, in welcher die reibschlüssige Kupplung RK, die zwischen den Verbrennungsmotor VM und die Getriebeeingangswelle WGE geschaltet ist, durch eine formschlüssige Kupplung bzw. ein formschlüssiges Schaltelement FK ersetzt ist.

Weiterhin unterscheidet sich das Ausführungsbeispiel der Fig. 6 vom Ausführungsbeispiel der Fig. 1 dadurch, dass die erste Planetenstufe PG1 verdreht ist, sodass der Rotor der an die Zwischenwelle ZW1 fest angebundenen elektrischen Maschine EM1 beide Planetensätze PG1 und PG2 überdecken kann, sodass sich eine Bauraumoptimierung ergibt.

Auch bei der Variante der Fig. 6 sind das formschlüssige Schaltelement FK sowie die elektrische Maschine EM1 des Antriebsaggregats AG optionale Baugruppen.

Die Verschaltung der einzelnen Elemente der Planentenstufe PG1 und PG2 ist bei den Ausführungsbeispielen der Fig. 1 bis 6 identisch, sodass hinsichtlich dieser Details für die Ausführungsbeispiele der Fig. 2 bis 6 auf die Ausführungen zum Ausführungsbeispiel der Fig. 1 verwiesen wird.

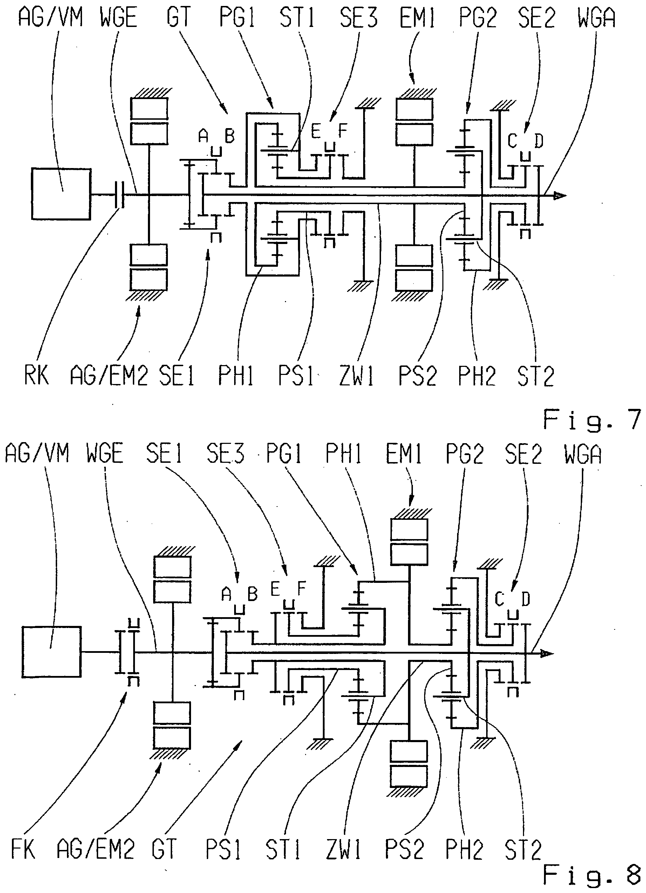

Fig. 7 und 8 zeigen zwei Varianten von Getrieben GT, in welchen zusätzlich zu dem ersten Schaltelement SE1 und dem zweiten Schaltelement SE2 ein drittes Schaltelement vorhanden ist, wodurch im Unterscheid zu den Ausführungsbeispielen der Fig. 1 bis 6 das dritte Element der ersten Planetenstufe PG1, also das Sonnenrad PS1 der ersten Planetenstufe PG1, nicht permanent gehäusefest angebunden ist, sondern vielmehr über das dritte Schaltelement PS1 zwischen einer gehäusefesten Anbindung und einer Anbindung an das zweite Element der ersten Planetenstufe PG1, also an den Steg ST1 der ersten Planetenstufe PG1, umgeschaltet werden kann. Hierdurch stellt dann das Getriebe GT für die elektrische Maschine EM1 wiederum zwei Gänge und für das Antriebsaggregate AG vier Gänge bereit.

Durch das dritte Schaltelement SE3, welches wiederum als Doppelschaltelement ausgeführt ist und die beiden geschlossenen Schaltstellungen E und F sowie eine weitere neutrale, geöffnete Schaltstellung aufweist, ist demnach das dritte Element der ersten Planetenstufe, nämlich die Sonne PS1 der ersten Planentenstufe PG1, hinsichtlich seiner Anbindung umschaltbar.

Dann, wenn die erste Schaltstellung F des dritten Schaltelements SE3 geschlossen ist, ist die Sonne PS1 der ersten Planetenstufe PG1 gehäusefest angebunden.

Dann, wenn die zweite Schaltstellung E des dritten Schaltelements SE3 geschlossen ist, ist das Sonnenrad PS1 der ersten Planetenstufe PG1 an den Steg ST1 der ersten Planetenstufe PG1.

Bei geschlossener zweiter Schaltstellung E ist die erste Planetenstufe PS1 überbrückt bzw. im Blockumlauf. Dann, wenn die erste Planetenstufe PG1 überbrückt ist, kann der Verbrennungsmotor VM bzw. das Antriebsaggregat AG den durch die zweite Planetenstufe PS2 bereitgestellten ersten Gang für die elektrische Maschine EM1 nutzen. Dadurch wird ein vierter Gang für das Antriebsaggregat AG, nämlich für den Verbrennungsmotor VM des Antriebsaggregats AG und die elektrische Maschine EM2 des Antriebsaggregats AG, bereitgestellt.

Die Ausführungsbeispiele der Fig. 7 und 8 unterscheiden sich dadurch voneinander, dass in Fig. 7 zwischen den Verbrennungsmotor VM des Antriebsaggregats AG und die Getriebeeingangswelle WGE an eine reibschlüssige Kupplung RK geschaltet ist, wohingegen in Fig. 8 zwischen den Verbrennungsmotor VM des Antriebsaggregats AG und die Getriebeeingangswelle WGE ein formschlüssiges Schaltelement FK geschaltet ist.

Ein weiterer Unterschied zwischen den Ausführungsbeispielen der Fig. 7 und 8 besteht darin, dass im Ausführungsbeispiel der Fig. 8 im Vergleich zum im Ausführungsbeispiel der Fig. 7 die erste Planetenstufe PS1 gedreht ist, sodass der Rotor der permanent an die Zwischenwelle ZW1 gekoppelten elektrischen Maschine EM1 beide Planetenstufen PS1 und PS2 überdecken kann, wodurch eine Bauraumoptimierung bereitgestellt werden kann.

Vorteilhafte Schaltstellungskombinationen der Schaltstellungen A, B, C, D, E und F der formschlüssigen Schaltelemente SE1, SE2 und SE3 der Fig. 7 und 8 sind in der nachfolgenden Schalttabelle zusammengefasst, ebenso wie die sich für das Antriebsaggregat AG und die elektrische Maschine EM1 ergebenden Übersetzungen iAG und iEM1, und zwar für ein Zahlenbeispiel, in welchem die Standgetriebeübersetzung der ersten Planetenstufe PS1 -1,72 und die Standgetriebeübersetzung i0 der zweiten Planetenstufe PG2 -1,5 beträgt.

| A | B | C | D | E | F | i-EM1 | i-AG | |
|---|---|---|---|---|---|---|---|---|
| - | x | x | - | x | - | 2.5 | 2.5 | Gang 1 für VM/EM2. EM1 stützt Zugkraft während Schaltung E-F an Schaltelement SE3. |
| - | x | x | - | - | x | 2.5 | 1.5 | Gang 2 für VM/EM2. EM1 stützt Zugkraft während Schaltung B-A an Schaltelement SE1. |
| x | - | x | - | - | x | 2.5 | 1.0 | Gang 3 für VM/EM2. F bleibt an SE3 vorzugsweise geschlossen, ist jedoch lastfrei. EM1 synchronisiert Schaltung CD an Schaltelement SE2. |
| x | - | - | x | - | x | 1.0 | 1.0 | Gang 3 für VM/EM2. F bleibt an SE3 vorzugsweise geschlossen, ist jedoch lastfrei. EM1 stützt Zugkraft während Schaltung A-B an Schaltelement SE1. |
| - | x | - | x | - | x | 1.0 | 0.63 | Gang 4 für VM/EM2. |
| - | x | - | - | - | x | | | Neutral. VM Start über EM1 möglich. Laden in Neutral möglich. |

In der obigen Tabelle bedeutet das Symbol "x", dass die jeweilige Schaltstellung geschlossen ist, wohingegen das Symbol "-" bedeutet, dass die jeweilige Schaltstellung geöffnet ist.

Auch bei den Ausführungsbeispielen Fig. 7 und 8, die zwei Planetenstufen PG1 und PG2 sowie drei Schaltelement SE1, SE2 und SE3 umfassen, sodass für die elektrische Maschine EM1 zwei Gänge und für das Antriebsaggregat AG vier Gänge bereit gestellt werden können, handelt es sich bei der Reibkupplung RK bzw. bei dem formschlüssigen Schaltelement FK sowie bei der elektrischen Maschine EM2 des Antriebsaggregats AG um optionale Baugruppen. Ebenso kann in den Beispielen der Fig. 7 und 8 die reibschlüssige Kupplung RK bzw. die formschlüssige Kupplung FK derart angeordnet werden, dass dieselbe sowohl zwischen Verbrennungsmotor VM und die Getriebeeingangswelle WGE als auch zwischen die elektrische Maschine EM2 und die Getriebeeingangswelle WGE geschaltet ist, wie dies in Fig. 4 für die reibschlüssige Kupplung RK gezeigt ist.

Im Unterschied zu den in Fig. 7 und 8 gezeigten Verschaltungen der Elemente der Planetensätze PG1 und PG2 kann bei geschlossener Schaltstellung D am zweiten Schaltelement SE2 das Hohlrad PH2 auch an das Sonnenrad PS2 gekoppelt sein. Ebenso kann bei geschlossener Schaltstellung E am dritten Schaltelement SE3 das Sonnenrad PS1 der Planetenstufe PG1 auch mit dem Hohlrad PH1 derselben gekoppelt sein. In beiden Fällen hat dies die Wirkung einer überbrückten Planetenstufe, die sich im Blockumlauf befindet.

Bei den Getrieben GT der Fig. 7 und 8 sind zugkraftunterbrechungsfreie Schaltungen möglich, und zwar an allen Schaltelementen SE1, SE2 und SE3. Dann, wenn am Schaltelement SE2 eine Schaltung zwischen den Schaltstellungen C und D vorgenommen wird, wird zur Bereitstellung einer zugkraftunterbrechungsfreien Schaltung am zweiten Schaltelement SE2 über das Antriebsaggregat AG an der Getriebeausgangswelle WGA Antriebsmoment bereitgestellt, nämlich über eine geschlossene Schaltstellung A am Schaltelement SE1. Dann, wenn am ersten Schaltelement SE1 oder dritten Schaltelement SE3 eine Schaltung zwischen den jeweiligen Schaltstellungen A und B bzw. E und F ausgeführt werden soll, kann dies ebenfalls zugkraftunterbrechungsfrei erfolgen, wobei dann die permanent an die Zwischenwelle ZW1 gekoppelte elektrische Maschine EM1 an der Getriebeausgangswelle WGA ein Antriebsmoment bereitstellt.

Die übrige Verschaltung der einzelnen Elemente der Planentenstufe PG1 und PG2 ist bei den Ausführungsbeispielen der Fig. 1 bis 8 identisch, sodass hinsichtlich dieser Details für die Ausführungsbeispiele der Fig. 7 und 8 auf die Ausführungen zum Ausführungsbeispiel der Fig. 1 verwiesen wird.

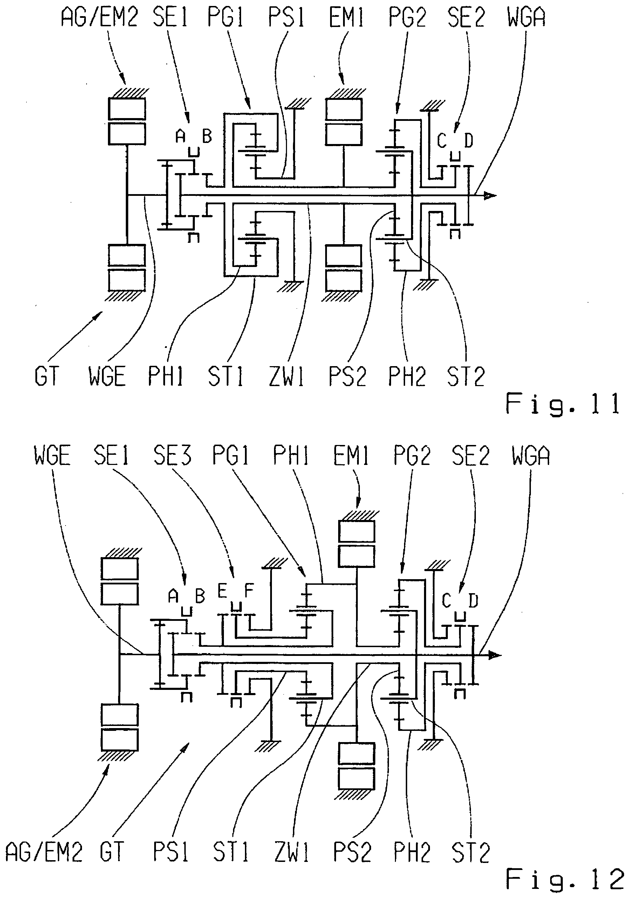

Fig. 11 und 12 zeigen Varianten der Erfindung, die den Varianten der Fig. 1 und 8 entsprechen, wobei jedoch im Unterschied zu den Varianten der Fig. 1 und 8 der Verbrennungsmotor VM des Antriebsaggregats AG sowie die reibschlüssige Kupplung RK bzw. das formschlüssige Schaltelement FK entfällt. Hinsichtlich aller übrigen Details stimmen die Varianten der Fig. 11 und 12 jedoch mit den Varianten der Fig. 1 und 8 überein, so dass zur Vermeidung von Wiederholungen auf die obigen Ausführungen verwiesen wird. Bei den Varianten der Fig. 1 bis 8 handelt es sich um Getriebe für Hybridfahrzeuge, wobei es sich bei den Varianten der Fig. 11 und 12 um Getriebe für rein elektrische Fahrzeuge handelt.

Die Getriebe GT der Fig. 1 bis 8, 11 und 12 eignen sich allesamt für Standardantriebsstrangkonfiguration mit einem koaxialen Achsantrieb, bei welchem also das Getriebe GT in Längsrichtung eines Kraftfahrzeugs verbaut ist. Dabei sind gemäß den obigen Figuren die Getriebeeingangswelle WGE und die Getriebeausgangswelle WGA koaxial hintereinander angeordnet, wobei die Zwischenwelle ZW1, an welche die elektrische Maschine EM permanent gekoppelt ist, zumindest abschnittsweise koaxial um die Getriebeausgangswelle WGA herum angeordnet ist.

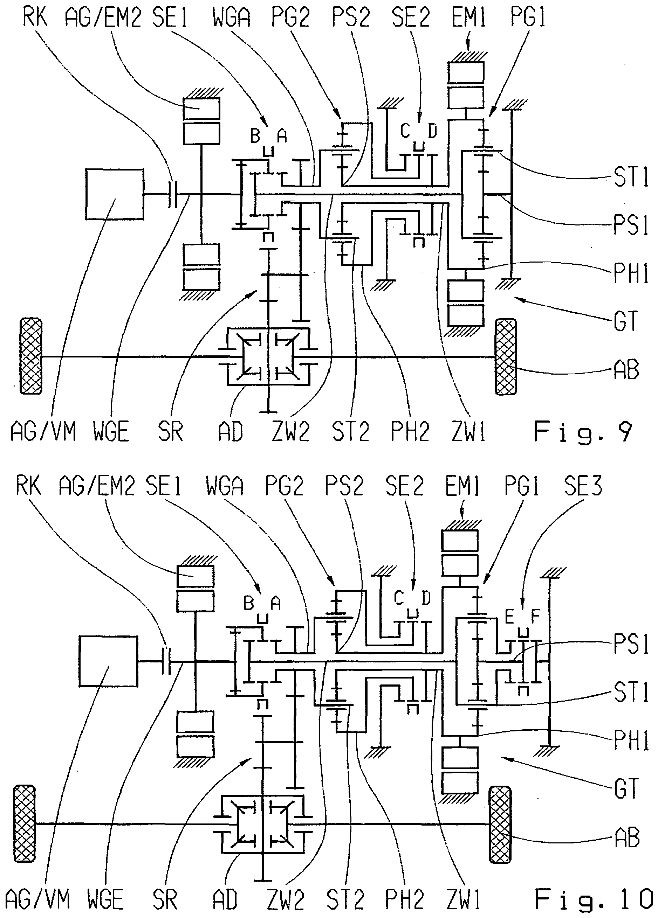

Demgegenüber zeigen Fig. 9 und 10 Ausführungsformen von Getrieben GT, die bei einer sogenannten Front-Quer-Antriebsstrangkonfiguration zum Einsatz kommen können. So zeigt Fig. 9 eine Variante eines Getriebes GT, die für die elektrische Maschine EM1, die an der Zwischenwelle ZW1 permanent angreift, zwei Gänge und für das Antriebsaggregat AG, also für den Verbrennungsmotor VM und die elektrische Maschine EM2, drei Gänge bereit stellt. Fig. 10 zeigt eine Variante, in welcher das Getriebe GT für die elektrische Maschine EM1 zwei Gänge und für das Antriebsaggregat AG vier Gänge bereitstellt. Im Ausführungsbeispiel der Fig. 9 umfasst das Getriebe GT demnach zwei Planetenstufen PG1 und PG2 und zwei Schaltelemente SE1 und SE2, wohingegen das Getriebe GT der Fig. 10 zusätzlich das dritte Schaltelement SE3 umfasst.

Hinsichtlich der Anbindung der einzelnen Elemente der Planetenstufen PG1 und PG2 und dem Zusammenwirken derselben mit den Schaltstellungen der Schaltelemente SE1, SE2 und gegebenenfalls SE3 wird auf die obigen Ausführungen zu den Ausführungsbeispielen der Fig. 1 bis 8 verwiesen.

In Fig. 9 und 10 ist die zeichnerische Anordnung der Planetensätze PG1 und PG2 vertauscht und am Planetensatz PG2 ist bei geschlossner Schaltstellung D und demnach bei überbrücktem Planetensatz PG2 das Hohlrad PH2 mit dem Sonnerad PS2 verbunden, wobei jedoch auch in Fig. 9 und 10 bei geschlossener Schaltstellung D alternativ das Hohlrad PH2 an den Steg ST2 angebunden sein kann. In jedem Fall ist bei geschlossener Schaltstellung D der Planetensatz PG2 im Btockumlauf überbrückt. In Fig. 10 kann bei geschlossener Schaltstellung E, ebenso wie in Fig. 7 und 8, zur Überbrückung des Planetensatzes PG1 das Sonnerad PS 1 an das jeweilige Hohlrad PH1 angebunden sein.

Die Ausführungsbeispiele der Fig. 9 und 10 unterscheiden sich von den Ausführungsbeispielen der anderen Figuren dadurch, dass in den Ausführungsbeispielen der Fig. 9 und 10 die Getriebeausgangswelle WGA zumindest abschnittsweise koaxial um eine weitere Zwischenwelle ZW2 herum angeordnet ist, wobei auch die Zwischenwelle ZW1, an welche die elektrische Maschine EM1 permanent gekoppelt ist, zumindest abschnittsweise koaxial um die weitere Zwischenwelle ZW2 herum angeordnet ist. Die weitere Zwischenwelle ZW2 ist dabei koaxial hinter der Getriebeeingangswelle WGE positioniert.

Wie Fig. 9, 10 entnommen werden kann, ist die zumindest abschnittsweise um die weitere Zwischenwelle ZW2 herum angeordnete Getriebeausgangswelle WGA über Stirnradstufen SR und einem Achsdifferential AD des in Fig. 9 und 10 gezeigten Achsantriebs AB gekoppelt. Diese Stirnradstufen SR können eine zusätzliche Übersetzungsstufe bereitstellen.

Auch bei den Varianten der Fig. 9 und 10 handelt es sich bei den Reibkupplungen RK um optionale Baugruppen. Es ist möglich, die Reibkupplung RK durch formschlüssige Schaltelemente zu ersetzen oder auf dieselben vollständig zu verzichten. Ebenso handelt es sich bei der elektrischen Maschine EM2 des Antriebsaggregats AG um eine optionale Baugruppe. Ferner kann eine reibschlüssige Kupplung oder eine formschlüssige Kupplung sowohl zwischen den Verbrennungsmotor VM und die Getriebeeingangswelle WGE als auch zwischen die elektrische Maschine EM2 und die Getriebeeingangswelle WGE gekoppelt sein.

Da bei der Variante der Fig. 10 das das dritte Schaltelement SE3 am Ende des Getriebes GT angeordnet ist, kann das Getriebe GT der Fig. 9 im Sinne einer Baukastenkonstruktion einfach zum Getriebe GT der Fig. 10 abgewandelt werden.

### Bezugszeichen

- A: Schaltstellung
- AB: Achsantrieb
- AD: Achsdifferenzial
- AG: Antriebsaggregat
- B: Schaltstellung
- C: Schaltstellung
- D: Schaltstellung
- E: Schaltstellung
- EM1: erste elektrische Maschine
- EM2: zweite elektrische Maschine
- F: Schaltstellung
- FK: formschlüssiges Schaltelement
- GT: Getriebe
- PG1: erster Planetensatz
- PG2: zweiter Planetensatz
- PH1: Hohlrad des ersten Planetensatzes
- PH2: Hohlrad des zweiten Planetensatzes
- PS1: Sonnenrad des ersten Planetensatzes
- PS2: Sonnenrad des zweiten Planetensatzes
- RK: reibschlüssige Kupplung
- SE1: erstes Schaltelement
- SE2: zweites Schaltelement
- SE3: drittes Schaltelement
- SR: Stirnradstufe
- ST1: Steg des ersten Planetensatzes
- ST2: Steg des zweiten Planetensatzes
- WGE: Getriebeeingangswelle
- WGA: Getriebeausgangswelle
- VM: Verbrennungsmotor
- ZW1: erste Zwischenwelle
- ZW2: zweite Zwischenwelle

## Patentansprüche

1. Getriebe eines Kraftfahrzeugs, mit einer Getriebeeingangswelle (WGE), an die ein Antriebsaggregat (AG) des Kraftfahrzeugs koppelbar ist, mit einer Getriebeausgangswelle (WGA), an die ein Achsantrieb (AB) des Kraftfahrzeugs koppelbar ist, mit mehreren koaxial hintereinander angeordneten Planetensätzen (PG1, PG2) und mit mehreren formschlüssigen Schaltelementen (SE1, SE2), wobei ein erstes Element (PH1) eines ersten Planetensatzes (PG1) mit einem ersten Element (PS2) eines zweiten Planetensatzes (PG2) über eine zwischen die Getriebeeingangswelle (WGE) und die Getriebeausgangswelle (WGA) schaltbare Zwischenwelle (ZW1) permanent gekoppelt ist, wobei an diese Zwischenwelle (ZW1) eine elektrische Maschine (EM1) permanent gekoppelt ist, wobei ein zweites Element (ST2) des zweiten Planetensatzes (PG2) mit der Getriebeausgangswelle (WGA) permanent gekoppelt ist, **dadurch gekennzeichnet, dass** dass in einer ersten Schaltstellung (A) eines ersten formschlüssigen Schaltelements (SE1) die Getriebeeingangswelle (WGE) direkt an die Getriebeausgangswelle (WGA) gekoppelt ist, wohingegen in einer zweiten Schaltstellung (B) des ersten formschlüssigen Schaltelements (SE1) die Getriebeeingangswelle (WGE) an ein zweites Element (ST1) des ersten Planetensatzes (PG1) gekoppelt ist, und dass in einer ersten Schaltstellung (C) eines zweiten formschlüssigen Schaltelements (SE2) ein drittes Element (PH2) des zweiten Planetensatzes (PG2) gehäusefest angebunden ist, wohingegen in einer zweiten Schaltstellung (D) des zweiten formschlüssigen Schaltelements (SE2) das dritte Element (PH2) des zweiten Planetensatzes (PG2) an das zweite Element (ST2) oder an das erste Element (PS2) des zweiten Planetensatzes (PG2) gekoppelt und demnach der zweite Planetensatz (PG2) im Blockumlauf überbrückt ist.

2. Getriebe nach Anspruch 1, **dadurch gekennzeichnet, dass** an die Getriebeeingangswelle (WGE) als Antriebsaggregat (AG) des Kraftfahrzeugs ein Verbrennungsmotor (VM) und/oder eine zweite elektrische Maschine (EM2) koppelbar ist.

3. Getriebe nach Anspruch 2, **gekennzeichnet durch** eine reibschlüssige Kupplung (RK) oder **durch** ein formschlüssiges Schaltelement (FK), über welche oder welches der Verbrennungsmotor (VM) an die Getriebeeingangswelle (WGE) koppelbar und von derselben trennbar ist.

4. Getriebe nach Anspruch 2 oder 3, **dadurch gekennzeichnet, dass** die zweite elektrische Maschine (EM2) entweder mit der Getriebeeingangswelle (WGE) permanent gekoppelt ist oder an die Getriebeeingangswelle (WGE) über eine reibschlüssige Kupplung (RK) oder ein formschlüssiges Schaltelement (FK) koppelbar und von derselben trennbar ist.

5. Getriebe nach einem der Ansprüche 1 bis 4, **dadurch gekennzeichnet, dass** ein drittes Element (PS1) des ersten Planetensatzes (PG1) permanent gehäusefest angebunden ist, sodass das Getriebe für die permanent an die Zwischenwelle (ZW1) gekoppelte elektrische Maschine (EM1) zwei Gänge und für das Antriebsaggregat (AG) drei Gänge bereitstellt.

6. Getriebe nach einem der Ansprüche 1 bis 4, **gekennzeichnet durch** ein drittes formschlüssiges Schaltelement (SE3), wobei in einer ersten Schaltstellung (F) des dritten Schaltelements (SE3) ein drittes Element (PS1) des ersten Planetensatzes (PG1) gehäusefest angebunden ist, und wobei in einer zweiten Schaltstellung (E) des dritten Schaltelements (SE3) das dritte Element (PS1) des ersten Planetensatzes (PG1) an das zweite Element (ST1) des ersten Planetensatzes (PG1) oder an das erste Element (PH1) des ersten Planetensatzes (PG1) gekoppelt und demnach der erste Planetensatz (PG1) im Blockumlauf überbrückt ist, sodass das Getriebe für die permanent an die Zwischenwelle (ZW1) gekoppelte elektrische Maschine (EM1) zwei Gänge und für das Antriebsaggregat (AG) vier Gänge bereitstellt.

7. Getriebe nach einem der Ansprüche 1 bis 6, **dadurch gekennzeichnet, dass** die formschlüssigen Schaltelement (SE1, SE2, SE3) jeweils als Doppelschaltelemente ausgebildet sind und neben der ersten und zweiten, jeweils geschlossenen Schaltstellung eine dritte, neutrale bzw. geöffnete Schaltstellung aufweisen.

8. Getriebe nach einem der Ansprüche 1 bis 7, **dadurch gekennzeichnet, dass** das zweite formschlüssige Schaltelement (SE2) zwischen der ersten Schaltstellung (C) und der zweiten Schaltstellung (D) zur Gewährleistung einer zugkraftunterbrechungsfreien Schaltung dann geschaltet wird, wenn das Antriebsaggregat (AG) an der Getriebeausgangswelle (WGA) Zugkraft bereitstellt.

9. Getriebe nach einem der Ansprüche 1 bis 8, **dadurch gekennzeichnet, dass** das erste formschlüssige Schaltelement (SE1) zwischen der ersten Schaltstellung (A) und der zweiten Schaltstellung (B) und/oder das dritte formschlüssige Schaltelement (SE3) zwischen der ersten Schaltstellung (F) und der zweiten Schaltstellung (E) zur Gewährleistung einer zugkraftunterbrechungsfreien Schaltung dann geschaltet wird, wenn die permanent an die Zwischenwelle (ZW1) gekoppelte elektrische Maschine (EM1) an der Getriebeausgangswelle (WGA) Zugkraft bereitstellt.

10. Getriebe nach einem der Ansprüche 1 bis 9, **dadurch gekennzeichnet, dass** die Getriebeeingangswelle (WGE) und die Getriebeausgangswelle (WGA) koaxial hintereinander angeordnet sind, und dass die Zwischenwelle (ZW1), an welche die erste elektrische Maschine (EM1) permanent gekoppelt ist, zumindest abschnittsweise koaxial um die Getriebeausgangswelle (WGA) herum angeordnet ist.

11. Getriebe nach einem der Ansprüche 1 bis 9, **dadurch gekennzeichnet, dass** die Getriebeausgangswelle (WGA) zumindest abschnittsweise koaxial um eine weitere Zwischenwelle (ZW2) herum angeordnet ist, und dass die Zwischenwelle (ZW1), an welche die erste elektrische Maschine (EM1) permanent gekoppelt ist, ebenfalls zumindest abschnittsweise koaxial um die weitere Zwischenwelle (ZW2), die koaxial hinter der Getriebeeingangswelle (WGE) angeordnet ist, herum angeordnet ist.

12. Antriebsstrang eines Kraftfahrzeugs, mit einem Antriebsaggregat (AG) und mit einem Getriebe (GT), **dadurch gekennzeichnet, dass** das Getriebe (GT) nach einem der Ansprüche 1 bis 11 ausgebildet ist.

## Claims

1. Transmission of a motor vehicle, having a transmission input shaft (WGE), to which a drive assembly (AG) of the motor vehicle can be coupled, having a transmission output shaft (WGA), to which an axle drive (AB) of the motor vehicle can be coupled, having a plurality of planetary sets (PG1, PG2) which are arranged coaxially behind one another, and having a plurality of positively locking shifting elements (SE1, SE2), a first element (PH1) of a first planetary set (PG1) being coupled permanently to a first element (PS2) of a second planetary set (PG2) via an intermediate shaft (ZW1) which can be connected between the transmission input shaft (WGE) and the transmission output shaft (WGA), an electric machine (EM1) being coupled permanently to said intermediate shaft (ZW1), a second element (ST2) of the second planetary set (PG2) being coupled permanently to the transmission output shaft (WGA), **characterized in that**, in a first shifting position (A) of a first positively locking shifting element (SE1), the transmission input shaft (WGE) is coupled directly to the transmission output shaft (WGA), whereas, in a second shifting position (B) of the first positively locking shifting element (SE1), the transmission input shaft (WGE) is coupled to a second element (ST1) of the first planetary set (PG1), and **in that**, in a first shifting position (C) of a second positively locking shifting element (SE2), a third element (PH2) of the second planetary set (PG2) is attached in a manner which is fixed to the housing, whereas, in a second shifting position (D) of the second positively locking shifting element (SE2), the third element (PH2) of the second planetary set (PG2) is coupled to the second element (ST2) or to the first element (PS2) of the second planetary set (PG2), and accordingly the second planetary set (PG2) is bridged in the block rotation.

2. Transmission according to Claim 1, **characterized in that** an internal combustion engine (VM) and/or a second electric machine (EM2) can be coupled to the transmission input shaft (WGE) as drive assembly (AG) of the motor vehicle.

3. Transmission according to Claim 2, **characterized by** a frictional clutch (RK) or by a positively locking shifting element (FK), via which clutch (RK) or shifting element (FK) the internal combustion engine (VM) can be coupled to the transmission input shaft (WGE) and can be disconnected from the latter.

4. Transmission according to Claim 2 or 3, **characterized in that** the second electric machine (EM2) is either coupled permanently to the transmission input shaft (WGE) or can be coupled to and can be disconnected from the transmission input shaft (WGE) via a frictional clutch (RK) or a positively locking shifting element (FK).

5. Transmission according to one of Claims 1 to 4, **characterized in that** a third element (PS1) of the first planetary set (PG1) is attached permanently in a manner which is fixed to the housing, with the result that the transmission provides two gears for the electric machine (EM1) which is coupled permanently to the intermediate shaft (ZW1) and provides three gears for the drive assembly (AG).

6. Transmission according to one of Claims 1 to 4, **characterized by** a third positively locking shifting element (SE3), a third element (PS1) of the first planetary set (PG1) being attached in a manner which is fixed to the housing in a first shifting position (F) of the third shifting element (SE3), and, in a second shifting position (E) of the third shifting element (SE3), the third element (PS1) of the first planetary set (PG1) being coupled to the second element (ST1) of the first planetary set (PG1) or to the first element (PH1) of the first planetary set (PG1), and the first planetary set (PG1) accordingly being bridged in the block rotation, with the result that the transmission provides two gears for the electric machine (EM1) which is coupled permanently to the intermediate shaft (ZW1) and provides four gears for the drive assembly (AG).

7. Transmission according to one of Claims 1 to 6, **characterized in that** the positively locking shifting elements (SE1, SE2, SE3) are configured in each case as double shifting elements and, in addition to the first and second, respectively closed shifting position, have a third, neutral or open shifting position.

8. Transmission according to one of Claims 1 to 7, **characterized in that** the second positively locking shifting element (SE2) is shifted between the first shifting position (C) and the second shifting position (D) in order to ensure a shifting operation which is free from an interruption to the tractive power, when the drive assembly (AG) provides tractive power at the transmission output shaft (WGA).

9. Transmission according to one of Claims 1 to 8, **characterized in that** the first positively locking shifting element (SE1) is shifted between the first shifting position (A) and the second shifting position (B) and/or the third positively locking shifting element (SE3) is shifted between the first shifting position (F) and the second shifting position (E) in order to ensure a shifting operation which is free from an interruption to the tractive power, when the electric machine (EM1) which is coupled permanently to the intermediate shaft (ZW1) provides tractive power at the transmission output shaft (WGA).

10. Transmission according to one of Claims 1 to 9, **characterized in that** the transmission input shaft (WGE) and the transmission output shaft (WGA) are arranged coaxially behind one another, and **in that** the intermediate shaft (ZW1), to which the first electric machine (EM1) is coupled permanently, is arranged at least in sections coaxially around the transmission output shaft (WGA).

11. Transmission according to one of Claims 1 to 9, **characterized in that** the transmission output shaft (WGA) is arranged at least in sections coaxially around a further intermediate shaft (ZW2), and **in that** the intermediate shaft (ZW1), to which the first electric machine (EM1) is coupled permanently, is likewise arranged at least in sections coaxially around the further intermediate shaft (ZW2) which is arranged coaxially behind the transmission input shaft (WGE).

12. Drive train of a motor vehicle, having a drive assembly (AG) and having a transmission (GT), **characterized in that** the transmission (GT) is configured according to one of Claims 1 to 11.

## Revendications

1. Boîte de vitesse d'un véhicule, comportant un arbre d'entrée de boîte de vitesse (WGE) auquel peut être accouplé un groupe moteur (AG) du véhicule automobile, comportant un arbre de sortie de boîte de vitesses (WGA) auquel peut être accouplé un essieu (AB) du véhicule automobile, comportant plusieurs trains planétaires (PG1, PG2) disposés coaxialement l'un à la suite de l'autre et comportant plusieurs éléments de commutation (SE1, SE2) à complémentarité de forme, dans lequel un premier élément (PH1) d'un premier train planétaire (PG1) est accouplé de manière permanente à un premier élément (PS2) d'un deuxième train planétaire (PG2) par l'intermédiaire d'un arbre intermédiaire (ZW1) pouvant être amené à commuter entre l'arbre d'entrée de boîte de vitesse (WGE) et l'arbre de sortie de boîte de vitesse (WGA), dans lequel une machine électrique (EM1) est accouplée en permanence audit arbre intermédiaire (ZW1), dans lequel un deuxième élément (ST2) du deuxième train planétaire (PG2) est accouplé en permanence à l'arbre de sortie de boîte de vitesse (WGA), **caractérisée en ce que** l'arbre d'entrée de boîte de vitesse (WGE), à une première position de commutation (A) d'un premier élément de commutation à complémentarité de forme (SE1) est directement accouplé à l'arbre de sortie de boîte de vitesse (WGA), alors que l'arbre d'entrée de boîte de vitesse (WGE), à une deuxième position de commutation (B) du premier élément de commutation à complémentarité de forme (SE1) est accouplé à un deuxième élément (ST1) du premier train planétaire (PG1), et **en ce qu'**un troisième élément (PH2) du deuxième train planétaire (PG2) est relié de manière solidaire du boîtier, à une première position de commutation (C) d'un deuxième élément de commutation à complémentarité de forme (SE2), tandis que le troisième élément (PH2) du deuxième train planétaire (PG2), à une deuxième position de commutation (D) du deuxième élément de commutation à complémentarité de forme (SE2), est accouplé au deuxième élément (ST2) ou au premier élément (PS2) du deuxième train planétaire (PG2), de sorte que le deuxième train planétaire (PG2) est contourné en bloc.

2. Boîte de vitesse selon la revendication 1, **caractérisée en ce qu'**un moteur à combustion interne (VM) et/ou une deuxième machine électrique (EM2) peut être accouplé à l'arbre d'entrée de boîte de vitesse (WGE) en tant que groupe moteur (AG) du véhicule automobile.

3. Boîte de vitesse selon la revendication 2, **caractérisée par** un embrayage à friction (RK) ou par un élément de commutation à complémentarité de forme (FK) par l'intermédiaire duquel le moteur à combustion interne (VM) peut être accouplé à l'arbre d'entrée de boîte de vitesse (WGE) et peut en être séparé.

4. Boîte de vitesse selon la revendication 2 ou 3, **caractérisée en ce que** la deuxième machine électrique (EM2) soit est accouplée en permanence à l'arbre d'entrée de boîte de vitesse (WGE), soit peut être accouplée à l'arbre d'entrée de boîte de vitesse (WGE) par l'intermédiaire d'un embrayage à friction (RK) ou d'un élément de commutation à complémentarité de forme (FK) et peut en être séparé.

5. Boîte de vitesse selon l'une quelconque des revendications 1 à 4, **caractérisée en ce qu'**un troisième élément (PS1) du premier train planétaire (PG1) est relié en permanence de manière solidaire du boîtier, de manière à ce que la boîte de vitesse fournisse deux rapports pour la machine électrique (EM1) accouplée en permanence à l'arbre intermédiaire (ZW1), et à ce qu'elle fournisse trois rapports pour le groupe moteur (AG).

6. Boîte de vitesse selon l'une quelconque des revendications 1 à 4, **caractérisée par** un troisième élément de commutation à complémentarité de forme (SE3), dans laquelle, à une première position de commutation (F) du troisième élément de commutation (SE3), un troisième élément (PS1) du premier train planétaire (PG1) est relié de manière solidaire du boîtier, et dans laquelle, à une deuxième position de commutation (E) du troisième élément de commutation (SE3), le troisième élément (PS1) du premier train planétaire (PG1) est accouplé au deuxième élément (ST1) du premier train planétaire (PG1) ou au premier élément (PH1) du premier train planétaire (PG1) et par conséquent, le premier train planétaire (PG1) est contourné en bloc de manière à ce que la boîte de vitesse fournisse deux rapports pour la machine électrique (EM1) accouplée en permanence à l'arbre intermédiaire (ZW1) et fournisse quatre rapports pour le groupe moteur (AG).

7. Boîte de vitesse selon l'une quelconque des revendications 1 à 6, **caractérisée en ce que** des éléments de commutation à complémentarité de forme (SE1, SE2, SE3) sont respectivement réalisés sous la forme d'éléments de commutation doubles et **en ce qu'**ils présentent, outre les première et deuxième positions de commutation respectivement fermées, une position de commutation neutre ou ouverte.

8. Boîte de vitesse selon l'une quelconque des revendications 1 à 7, **caractérisée en ce que** le deuxième élément de commutation à complémentarité de forme (SE2) n'est commuté entre la première position de commutation (C) et la deuxième position de commutation (D) de manière à assurer une commutation exempte d'interruption de la force de traction que lorsque le groupe moteur (AG) fournit une force de traction à l'arbre de sortie de boîte de vitesse (WGA).

9. Boîte de vitesse selon l'une quelconque des revendications 1 à 8, **caractérisée en ce que** le premier élément de commutation à complémentarité de forme (SE1) n'est commuté entre la première position de commutation (A) et la deuxième position de commutation (B) et/ou **en ce que** le troisième élément à complémentarité de forme (SE3) n'est commuté entre la première position de commutation (F) et la deuxième position de commutation (E) de manière à assurer une commutation exempte d'interruption de la force de traction, que lorsque la machine électrique (EM1) accouplée en permanence à l'arbre intermédiaire (ZW1) fournit une force de traction à l'arbre de sortie de boîte de vitesse (WGA).

10. Boîte de vitesse selon l'une quelconque des revendications 1 à 9, **caractérisée en ce que** l'arbre d'entrée de boîte de vitesse (WGE) et l'arbre de sortie de boîte de vitesse (WGA) sont disposés coaxialement l'un à la suite de l'autre et **en ce que** l'arbre intermédiaire (ZW1), auquel est accouplée en permanence la première machine électrique (EM1), est au moins disposé coaxialement par sections autour de l'arbre de sortie de boîte de vitesse (WGA).

11. Boîte de vitesse selon l'une quelconque des revendications 1 à 9, **caractérisée en ce que** l'arbre de sortie de boîte de vitesse (WGA) est disposé coaxialement au moins par sections autour d'un autre arbre intermédiaire (ZW2) et **en ce que** l'arbre intermédiaire (ZW1), auquel la première machine électrique (EM1) est accouplée en permanence, est également disposé coaxialement au moins par sections autour de l'autre arbre intermédiaire (ZW2), qui est disposé coaxialement à la suite de l'arbre d'entrée de boîte de vitesse (WGE).

12. Chaîne cinématique d'un véhicule automobile, comportant un groupe moteur (AG) et comportant une boîte de vitesse (GT), **caractérisée en ce que** la boîte de vitesse (GT) est réalisée selon l'une quelconque des revendications 1 à 11.
